# EUROPÄISCHE PATENTSCHRIFT

(11) **EP 0 459 563 B1**
(45) Veröffentlichungstag und Bekanntmachung des Hinweises auf die Patenterteilung: **25.03.1998**
(21) Anmeldenummer: 91201219.2
(22) Anmeldetag: 22.05.1991
(51) Int. Cl.: H04M 3/56, H04Q 11/04

(54) **Vermittlungssystem mit einer Konferenzeinrichtung**
Relaying system with a conference device
Système de commutation avec un dispositif de conférence

(30) Priorität: 26.05.1990 DE 4017027
(43) Veröffentlichungstag der Anmeldung: 04.12.1991
(73) Patentinhaber: Philips Patentverwaltung GmbH, 22335 Hamburg (DE); Philips Electronics N.V., 5621 BA Eindhoven (NL)
(72) Erfinder: Hofmann, Rudolf, Dipl.-Ing., W-8550 Forchheim (DE)
(74) Vertreter: Volmer, Georg, Dipl.-Ing.

(56) Entgegenhaltungen:
- DE-C- 3 329 779
- US-A- 4 416 007
- US-A- 4 658 398

## Beschreibung

Die Erfindung betrifft ein Vermittlungssystem, insbesondere PCM-Vermittlungssystem, mit einer Konferenzeinrichtung, bei der für jeden Konferenzteilnehmer aus Sprachproben der Konferenzteilnehmer ein Summensignal gebildet wird und für jeden Konferenzteilnehmer eine Sprachintensität ermittelt wird, mittels welcher der jeweilige Anteil der Sprachproben am Summensignal bestimmt wird.

Aus der DE-PS 33 29 779 ist ein Verfahren zur Herstellung von Konferenzverbindungen in einem Vermittlungssystem, insbesondere in einer PCM-Nebenstellenanlage, bekannt, bei dem während eines Pulsrahmens in einer Konferenzeinrichtung die von Konferenzteilnehmern empfangenen komprimierten Codeworte linearisiert und zwischengespeichert werden und bei dem, vor dem Aussenden während eines nachfolgenden Pulsrahmens zum Konferenzteilnehmer, ein Endteilsummen-Codewort gebildet und dieses zum komprimierten Codewort delinearisiert wird. Hierbei wird während des Pulsrahmens die Sprachintensität der einzelnen Konferenzteilnehmer gemessen und in Abhängigkeit dieser Sprachintensitäten eine Adaption von Gewichtungsfaktoren vorgenommen.

Hierzu sind die Sprachproben jedes Konferenzteilnehmers jeweils einer Meßeinrichtung zugeführt, die die Sprachintensitäten der einzelnen Konferenzteilnehmer messen. Ein Konferenzteilnehmer, dessen gemessene Sprachintensität eine vorgebbare Schwelle überschreitet, wird als sprechaktiv eingestuft. Hierbei kann diese vorgebbare Schwelle für jeden Konferenzteilnehmer getrennt entsprechend seiner im vergangenen Gesprächsverlauf gemessenen Sprachintensität angepaßt werden.

Der akustische Eindruck der Wiedergabe wird von manchem Konferenzteilnehmer nicht immer als "natürlich" empfunden.

Aufgabe der vorliegenden Erfindung ist es, ein Vermittlungssystem der eingangs genannten Art anzugeben, bei dem auf möglichst einfache Weise die Festlegung der Sprachzustände die gegenwärtige Gesprächssituation besser berücksichtigt.

Diese Aufgabe wird dadurch gelöst, daß für das Summensignal ebenfalls eine Sprachintensität ermittelt wird und zur Bestimmung des Anteils der Sprachprobe eines Konferenzteilnehmers am Summensignal dessen Sprachintensität mit der für das Summensignal ermittelten Sprachintensität verglichen wird.

Bei dieser Art der Festlegung der Sprachzustände wird nicht auf die absolute Stärke eines Konferenzteilnehmers abgestellt, sondern die Sprachintensitäten der einzelnen Konferenzteilnehmer werden in die Signalbewertung mit einbezogen. Dies hat zur Folge, daß bei einer insgesamt gemäßigten Gesprächssituation bereits ein geringer Lautstärkepegel zur Durchsetzung eines Konferenzteilnehmers ausreicht. In einer hitzigen, d.h. lautstarken, Gesprächssituation ist zum "Eingreifen" in das Gespräch ein lautstärkeres Sprachsignal erforderlich. Dies wird von den meisten Konferenzteilnehmern als sachgerecht und daher auch als natürlich empfunden.

Eine besonders einfache Ausgestaltung der Konferenzanordnung ergibt sich dadurch, daß aus der Sprachprobe eines jeden Konferenzteilnehmers und dem abgehenden Summensignal eine Betragsdifferenz gebildet und diese mit einem Schwellwert verglichen wird. Insbesondere wenn zur Berücksichtigung des zeitlich zurückliegenden Verlaufs der Sprachintensitäten sowohl des betreffenden Konferenzteilnehmers als auch des betreffenden Teilsummensignals eine Tiefpaßfilterung der Betragsdifferenz vorgenommen wird, kann der Aufwand zur Ermittlung der Sprachzustände reduziert werden, da der Pegel des Teilsummensignals nicht getrennt berechnet werden muß. Auf diese Weise können bei jeder Berechnung der Tiefpaßfilterung zwei Multiplikationen und eine Addition eingespart werden.

Weiterhin kann der Schaltungsaufwand dadurch vermindert werden, daß für alle Teilnehmer nur eine einzige Anordnung zur Bildung der Betragsdifferenz und des Schwellwertvergleichs verwendet wird, die im Zeit-Multiplexbetrieb betrieben wird.

In einer solchen Ausgestaltungsform der Erfindung ist es besonders vorteilhaft, die PCM-Worte der Sprachproben der einzelnen Konferenzteilnehmer innerhalb eines PCM-Rahmens nicht unmittelbar aufeinanderfolgend anzuordnen. Vielmehr ist die Anordnung der Sprachproben der Konferenzteilnehmer in dem PCM-Rahmen so zu wählen, daß sie mit einem gewissen zeitlichen Abstand aufeinanderfolgen.

Die zeitlichen Lücken zwischen den zusammengehörigen Sprachproben aller Teilnehmer einer Konferenz werden so gewählt, daß sie mindestens der Bearbeitungszeit (Summenbildung, Ermittlung des Sprachzustandes etc.) entsprechen. Auf diese Weise wird es ermöglicht, auch eine relativ langsame Anordnung zur Konferenzbildung im Zeit-Multiplex-Betrieb zu betreiben.

Im folgenden wird die Erfindung anhand von in der Zeichnung dargestellten Ausführungsbeispielen näher beschrieben und erläutert.

Es zeigen:
- Fig. 1: eine schematische Darstellung einer Konferenzeinrichtung mit Sprachprobenbewertung durch Pegelvergleicher als Blockschaltbild.
- Fig. 2: den Aufbau eines Pegelvergleichers.
- Fig. 3: eine schematische Darstellung einer Konferenzeinrichtung mit einem einzigen Pegelvergleicher.
- Fig. 4: eine Anordnung von Sprachproben innerhalb eine PCM-Rahmens.
- Fig. 5: der Zeitverlauf des Gewichtungsfaktors G eines Konferenzteilnehmers.
- Fig. 6: der Verlauf der Dämpfungswerte in halblogorithmischer Darstellung.

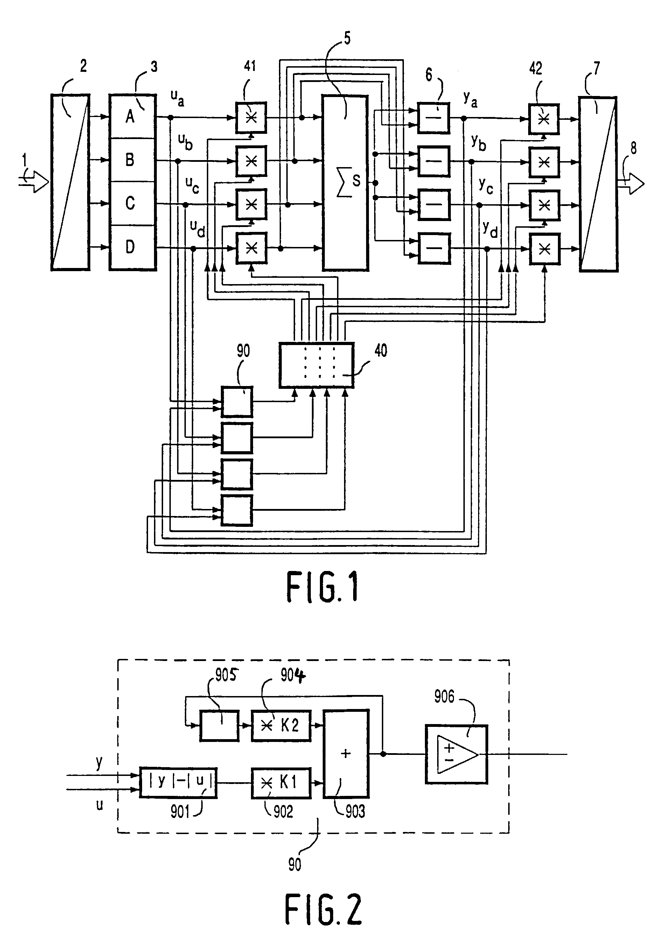

Fig. 1 zeigt in schematischer Darstellung ein Vermittlungssystem mit einer Konferenzeinrichtung mit vier Teilnehmern als Blockschaltbild. Neben einem solchen diskreten Aufbau ist es selbstverständlich auch möglich, eine solche Konferenzeinrichtung mittels eines Signalprozessors zu implementieren. Die Funktionen der einzelnen Blöcke des Blockschaltbildes können dann sinngemäß durch entsprechende Programmierung des Signalprozessors nachgebildet werden.

Bei dem im Ausführungsbeispiel dargestellten Vermittlungssystem handelt es sich um ein Vermittlungssystem, bei dem die Sprachsignale der einzelnen Teilnehmer als PCM-codierte Sprachproben über eine PCM-Sammelschiene 1 einem Codeumsetzer 2 zugeführt sind. Der Codeumsetzer 2 wandelt die seriell eintreffenden PCM-Werte in lineare Sprachproben A, B, C, D um, wobei jede Sprachprobe durch ein binäres Datenwort der Länge 13 Bit dargestellt ist. Die Sprachproben jedes Konferenzteilnehmers werden in einem Zwischenspeicher 3 bis zum Eintreffen der nächsten Sprachprobe des jeweiligen Konferenzteilnehmers zwischengespeichert.

Jede Sprachprobe A, B, C, D ist über je einen ersten Multiplizierer 41 einem Summierer 5 zugeführt. Der Summierer 5 bildet aus allen, durch die ersten Multiplizierer 41 eventuell abgeschwächten, Sprachproben ein Summen-Codewort (Summensignal). Damit sich ein Konferenzteilnehmer nicht selber hört (Echo bei langen Laufzeiten), darf das Summen-Codewort einem Konferenzteilnehmer nicht direkt zugeführt werden. Mittels einer für jeden Konferenzteilnehmer vorgesehenen Subtraktionsschaltung 6 wird aus dem Summen-Codewort S der Eigenanteil jeder Sprachprobe des Konferenzteilnehmers am Summen-Codewort entfernt. Das für jeden Konferenzteilnehmer auf diese Weise erhaltene Codewort wird als Teilsummen-Codewort y (bzw. allgemein als Teilsummensignal) bezeichnet.

Zur Bildung der Teilsummen-Codeworte ist jeder erste Eingang der Subtraktionsschaltung 6 jeweils mit einem Ausgang eines der ersten Multiplzierer 41 verbunden. Jedem zweiten Eingang der Subtraktionsschaltungen 6 ist das Summen-Codewort des Summierers 5 zugeführt. Die Ausgänge der Subtraktionsschaltungen 6 sind mit jeweils ersten Eingängen zweiter Multiplizierer 42 verbunden. Mittels dieser zweiten Multiplizierer 42 sind die ihnen jeweils zugeführten Teilsummen-Codeworte gegebenenfalls abschwächbar. Die Ausgänge dieser zweiten Multiplizierer 42 sind mit einem zweiten Codeumsetzer 7 verbunden, welcher den Konferenzteilnehmern zuzuführende Teilsummen-Codeworte in entsprechende delinearisierte PCM-Werte umwandelt und an entsprechender Stelle in den PCM-Rahmen wieder einfügt und über eine zweite Sammelschiene 8 den Konferenzteilnehmern zuführt.

Die Einstellung der Gewichtungsfaktoren für die Multiplizierer 41, 42 erfolgt in in der Bewertungseinheit 40 in Abhängigkeit davon, ob ein Teilnehmer als "sprechend" oder als "hörend" eingestuft wird. Diese Unterscheidung erfolgt in einem Pegelvergleicher 90, in dem das unbewertete ankommende Sprachsignal eines Teilnehmers mit dem unbewerteten abgehenden Teilsummensignal desselben Teilnehmers hinsichtlich ihres Pegels verglichen wird. Ist im Mittel der Pegel des ankommenden Signals größer als der Pegel des abgehenden Signals, wird der Teilnehmer als "sprechend" eingestuft.

Die Bewertungseinheit 40 steuert die Multiplizierer 41 so an, daß die ankommenden Signale von als "hörend" eingestuften Teilnehmern abgeschwächt werden. Auf diese Weise gehen Ruhesignale bzw. Störgeräusche nicht mit der vollen Leistung in die Summation mit ein. Signale von als "sprechend" eingestuften Teilnehmern hingegen werden von der Bewertungseinheit 40 nicht abgeschwächt. Außerdem kann durch entsprechende Wahl der Gewichtungsfaktoren für die Multiplizierer 41 sichergestellt werden, daß die Addierer 5 bzw. Subtrahierer 6 nicht überlaufen.

Sind Addierer 5 und Subtrahierer 6 für einen erweiterten Zahlenbereich (z.B. 16 bit Addierer für 13 bit Eingangsdatenworte) ausgelegt, so können zum anderen diese zweiten Multiplizierer 42 dazu verwendet werden, Teilsummensignale, die den Zahlenbereich des nachfolgenden Codeumsetzers 7 überschreiten, durch Abschwächung in den zulässigen Bereich zu führen (Begrenzerfunktion).

Die Bewertungseinheit 40 steuert die zweiten Multiplizierer 42 so an, daß die abgehenden Teilsummensignale der als "hörend" eingestuften Teilnehmer mit dem Faktor Eins bewertet werden. Auf diese Weise gelangen die Sprachproben nichtsprechender Teilnehmer ungedämpft durch diesen Teil der Konferenzeinrichtung.

Teilsummensignale der als "sprechend" eingestuften Teilnehmer werden durch die Multiplizierer 42 abgeschwächt. Die Einstellung der Gewichtungsfaktoren für die Multiplizierer 41, 42 erfolgt in gegenseitiger Abhängigkeit derart, daß das Produkt aus beiden Faktoren eine vorgegebene Schwelle nicht überschreitet. Besonders vorteilhaft ist es hierbei die Abschwächungsfaktoren in Abhängigkeit von der Anzahl der an der Konferenz beteiligten Teilnehmer zu wählen. Dadurch wird vermieden, daß bei Vorhandensein von Gabelschaltungen in der Übertragungsleitung Störgeräusche in die Konferenz zurückgekoppelt werden und dadurch Instabilitäten auftreten.

Bei der Bewertung der Sprachintensität einer Sprachprobe eines einzelnen Konferenzteilnehmers muß vermieden werden, daß kurzfristig auftretende hohe Zahlenwerte der Sprachprobe zu einer Bewertung des Konferenzteilnehmers als sprechaktiven Konferenzteilnehmer führen. Hierdurch würden kurzfristige Störsignale sofort in das Summen-Codewort eingehen und die Verständlichkeit der Konferenzteilnehmer untereinander verschlechtern. Im Ausführungsbeispiel der Erfindung sind die vorgesehenen Pegelvergleicher 9 daher so ausgestaltet, daß auch die Sprachintensitäten der jeweils der zu bewertenden Sprachprobe vorangegangenen Sprachproben eines Konferenzteilnehmers entsprechend angemessen berücksichtigt werden.

Fig. 2 zeigt den Aufbau eine einzelnen Pegelvergleichers 90. Die dem Pegelvergleicher 90 zugeführte jeweilige Sprachprobe u und das Teilsummensignal y sind in der Pegelvergleichseinheit 90 einem Betragssubtrahierer 901 zugeführt.

Der Betragssubtrahierer 901 bildet von dem an seinem ersten Eingang eingehenden Teilsummensignal y den Betrag !y! und subtrahiert hiervon den Betrag der Sprachprobe !u! des zu bewertenden Konferenzteilnehmers. Die Differenz !y! !u! wird mit einem ersten Koeffizienten K1 in einem ersten Multiplizierer 902 multipliziert und einem ersten Eingang eines Addierers 903 zugeführt. Der Ausgang eines Zwischenspeichers 905 wird über einen zweiten Multiplizierer 904 dem zweiten Eingang des Addierers 903 zugeführt. Im zweiten Multiplizierer 904 wird der Inhalt des Zwischenspeichers 905 mit einem zweiten Koeffizienten K2 multiplikativ verknüpft. Der Ausgang des Addierers 903 ist auf den Eingang des Zwischenspeichers 905 zurückgeführt. Die Koeffizienten K1 und K2 sind so gewählt, daß beide kleiner als der Zahlenwert Eins sind und der Koeffizient K1 gleich der Differenz zwischen dem Zahlenwert Eins und dem Koeffizienten K2 ist. Im Ausführungsbeispiel wurde für K1 der Wert 0,875 und für K2 der Wert 0,125 gewählt.

Durch die Wahl der Koeffizienten K1, K2 und der beschriebenen Verarbeitung der Signale unter Zwischenspeicherung des letzten berechneten Wertes wird eine von der Signalvergangenheit abhängige Bewertung erzielt. Im Wesen entspricht diese Signalverarbeitung einer Tiefpaß- bzw. einer Integratorfunktion.

Der Ausgang des Addierers 903 ist außerdem einem Schwellwertschalter 906 zugeführt. Ausgangswerte des Addierers 903, die kleiner oder gleich Null sind, stufen den zu bewertenden Konferenzteilnehmer als sprechaktiv ein.

Mit der Festlegung der Entscheidungsschwelle auf den Wer Null lassen sich bereits zufriedenstellende Ergebnisse erzielen. Um die gleichen Effekte, wie in der eingangs genannten Schrift, zu erzielen, bei der beispielsweise auch der bisherige Gesprächsverlauf eines einzelnen Teilnehmers berücksichtigt werden kann, kann auch hier die Entscheidungsschwelle durch weitere Bewertungs- und Steuereinrichtungen veränderbar ausgestaltet werden.

Zum Anheben eines Gewichtungsfaktors wird von einem PCM-Rahmen zum darauffolgenden PCM-Rahmen bzw. jeweils nach einer bestimmten Anzahl von PCM-Rahmen der Gewichtungsfaktor um einen bestimmten Wert, welcher im folgenden als Inkrementwert bezeichnet wird, erhöht. Dieser Vorgang wird solange ausgeführt, bis der Gewichtungsfaktor auf diese Weise einen bestimmten, durch die Gewichtungssteuerschaltung 40 vorgegebenen oberen, Grenzwert erreicht. Zur Absenkung eines Gewichtungsfaktors auf einen bestimmten vorgegebenen unteren Grenzwert wird der Gewichtungsfaktor durch Subtraktion eines bestimmten zweiten Zahlenwertes, welcher im folgenden als Dekrementwert bezeichnet wird, in jedem entsprechenden PCM-Rahmen vermindert. Hierbei wird der Dekrementwert so gewählt, daß er größer ist als der Inkrementwert. Auf diese Weise ist die Anzahl der PCM-Rahmen, in der ein Gewichtungsfaktor von einem oberen Wert auf einen unteren Wert vermindert wird, geringer als die Anzahl der PCM-Rahmen, in denen ein Gewichtungsfaktor von seinem unteren Wert auf einen oberen Wert erhöht wird. Da die Einstufung eines bisher nichtsprechaktiven Konferenzteilnehmers als nunmehr sprachaktiven Konferenzteilnehmer zeitlich meist mit der Einstufung eines bisher sprechaktiven Konferenzteilnehmers des nichtsprechaktive Konferenzteilnehmers einhergeht, erreicht man, daß auf diese relativ einfach zu realisierende Weise die Gesamtdämpfung während der gleitenden Adaption der Sprachproben allenfalls nur geringfügig über die Gesamtdämpfung vor bzw. nach der gleitenden Adaption wird. Dadurch werden Instabilitäten bei zu geringer Gesamtdämpfung vermieden.

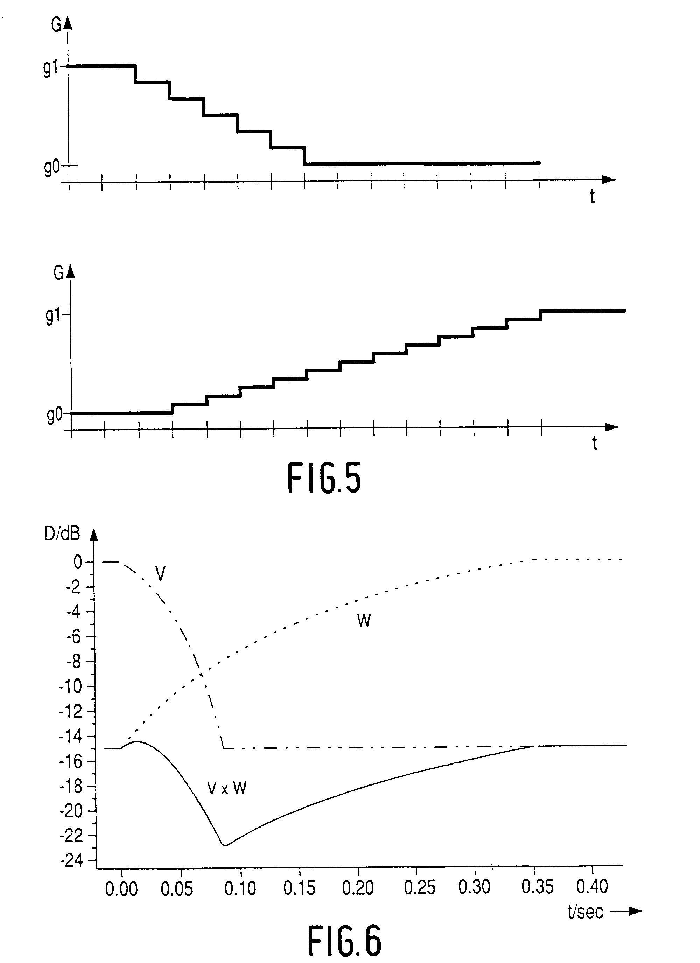

In dem Diagramm der Fig. 5 ist schematisch der Zeitverlauf des Gewichtungsfaktors G für einen Konferenzteilnehmer dargestellt, dessen Gewichtungsfaktor von einem oberen Grenzwert g1 auf einen unteren Grenzwert reduziert wird. Deutlich ist die Abstufung des Gewichtungsfaktors von PCM-Rahmen zu PCM-Rahmen sichtbar. Im darunter dargestellten Diagramm ist das Anheben eines Gewichtungsfaktors G dargestellt. Aufgrund des geringeren Inkrementwertes ist deutlich die längere Zeitspanne dargestellt, die der Gewichtungsfaktor G benötigt, um von seinem unteren Grenzwert g0 auf seinen oberen Grenzwert g1 zu gelangen.

Gute Ergebnisse lassen sich mit Inkrementwerten erzielen, die etwa 1/2 bis 1/4 des Dekrementwertes betragen. In einem Anwendungsfall, bei dem pro Sekunde 8000 Sprachproben pro Konferenzteilnehmer verarbeitet werden, ist beispielsweise der obere Grenzwert entsprechend 0dB-Dämpfung als Dezimalfaktor 1,0 und der untere Grenzwert entsprechend 15dB-Dämpfung als Dezimalfaktor 0,1778 gewählt. Wird als Inkrementwert der Dezimalwert 0,0003 gewählt, so ist der Übergang vom unteren zum oberen Grenzwert nach ca. 350 ms erfolgt, wenn nach jeder Sprachprobe inkrementiert wird. Wird als Dekrementwert das doppelte des Inkrementwertes gewählt, so ist der Übergang vom oberen Grenzwert zum unteren Grenzwert nach ca. 175 ms vollzogen.

Bei Konferenzschaltungen mit einer Vielzahl von Konferenzteilnehmern kann es durchaus vorkommen, daß zu unterschiedlichen Zeitpunkten mit der Absenkung bzw. Anhebung der Gewichtungsfaktoren der einzelnen Konferenzteilnehmer begonnen wird. Auch wenn sich im zeitlichen Verlauf der Absenkung bzw. Anhebung der Gewichtungsfaktoren Absenkungen und Anhebungen überschneiden, kann auf vorstehend beschriebene Weise eine Übersteuerung trotzdem auf einfache Weise vermieden werden. Bei einer ungleichen Anzahl von zu inkrementierenden und zu dekrementierenden Gewichtungsfaktoren werden die Dekrementwerte bzw. die Inkrementwerte so angepaßt, daß die Summe der Dekrementwerte um einen bestimmten Faktor (beispielsweise das Zweifache) größer ist als die Summe der Inkrementwerte.

Fig. 6 zeigt den Verlauf der Dämpfungswerte in halblogarithmischer Darstellung. Die Linine V zeigt den Dämpfungsverlauf, der mittels der Ansteuerung des ersten Multiplizierers 41 erhalten wird und W zeigt den Dämpfungsverlauf, der mit dem zweiten Multiplizierer 42 erhalten wird. Die Gesamtdämpfung VW übersteigt nur ganz kurzzeitig die Gesamtdämpfung von -15db.

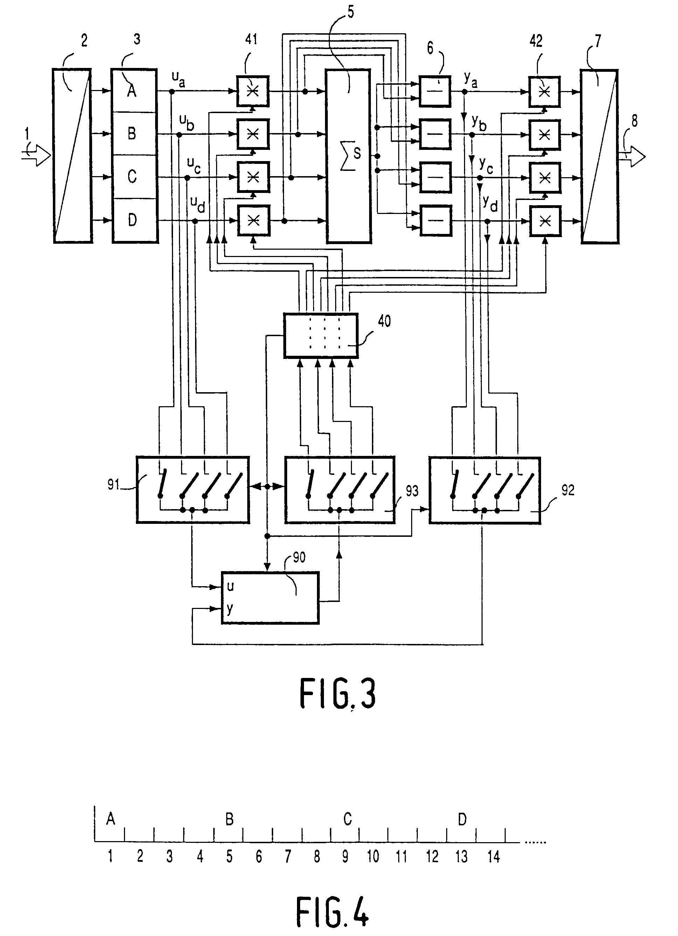

In Fig. 4 ist ein Teil eines PCM-Rahmens schematisch dargestellt. Die Sprachprobe des ersten Konferenzteilnehmers A ist in einem ersten Zeitschlitz 1 des PCM-Rahmens, die Sprachprobe des zweiten Konferenzteilnehmers B in einem fünften Zeitschlitz 5 usw. eingefügt. Innerhalb der Lücken, beispielsweise zwischen Zeitschlitz 1 und Zeitschlitz 5, werden Sprachproben von anderen Teilnehmern angeordnet, die nicht an dieser Konferenzschaltung beteiligt sind. Der Übersichtlichkeit halber sind in der Fig. 4 die Sprachproben dieser anderen Teilnehmer nicht eingezeichnet.

Zweckmäßigerweise wird der zeitliche Abstand, in der die Sprachproben zweier an einer Konferenzschaltung beteiligten Konferenzteilnehmer aufeinanderfolgen so gewählt, daß innerhalb dieser Zeit die Bewertung eines Konferenzteilnehmers abgeschlossen ist. Hierdurch wird selbst bei Bewertungsschaltungen, die eine Bewertung nicht innerhalb der Zeitdauer eines Zeitschlitzes durchführen können, nicht für jeden Konferenzteilnehmer ein Pegelvergleicher 90 benötigt, sondern es genügt, wie beschrieben, eine einzige Bewertungsschaltung für alle an einer Konferenzschaltung teilnehmenden Konferenzteilnehmer. Die Bewertung der Sprachproben erfolgt dabei immer mit dem Eintreffen einer neuen Sprachprobe. So werden der Bewertungsschaltung, beispielsweise bei der Bewertung des Konferenzteilnehmers C, zur Bildung des Summensignals y im Zeitschlitz 9 die Sprachproben A, B, C des gleichen Zeitschlitzes, und da die Sprachprobe D des gleichen Zeitschlitzes noch nicht eingetroffen ist, die Sprachprobe D des vorangegangenen Zeitschlitzes zugeführt.

Eine besonders einfache Ausgestaltung mit nur einem einzigen Pegelvergleicher 90, der den Pegelvergleicher für alle Konferenzteilnehmer zeitlich versetzt vornimmt, wird im folgenden in dem in Fig. 3 dargestellten Ausführungsbeispiel geschildert.

Die Sprachprobe u des jeweils zu bewertenden Konferenzteilnehmers wird durch einen ersten Multiplexer 91 und das jeweilige zugeordnete Summensignal y durch einen zweiten Multiplexer 92 mittels Steuersignalen der Gewichtungssteuerschaltung 40 ausgewählt und dem einzigen Pegelvergleicher 90 zugeführt. Das Ausgangssignal des Pegelvergleichers wird der Gewichtungssteuerschaltung 40 über einen Demultiplexer 93 zugeführt. Da für jede Sprachprobe im allgemeinen der im Zwischenspeicher 904 gespeicherte Wert verschieden ist, ist im Ausführungsbeispiel ein adressierbarer Zwischenspeicher vorgesehen.

## Patentansprüche

1. Vermittlungssystem, insbesondere PCM-Vermittlungssystem, mit einer Konferenzeinrichtung, bei der für jeden Konferenzteilnehmer aus Sprachproben (A-D) der Konferenzteilnehmer ein Summensignal gebildet wird (5) und für jeden Konferenzteilnehmer eine Sprachintensität ermittelt wird, mittels welcher der jeweilige Anteil der Sprachproben am Summensignal bestimmt wird,
dadurch gekennzeichnet,
daß die Konferenzeinrichtung so ausgestaltet ist, daß für das Summensignal ebenfalls eine Sprachintensität ermittelt wird und zur Bestimmung des Anteils der Sprachprobe eines Konferenzteilnehmers am Summensignal dessen Sprachintensität mit der für das Summensignal ermittelten Sprachintensität verglichen wird (90).

2. Vermittlungssystem nach Anspruch 1,
dadurch gekennzeichnet,
daß die Konferenzeinrichtung so ausgestaltet ist, daß zum Vergleich der Sprachintensitäten eine Betragsdifferenz (!y!-!u!) von dem Summensignal (y) und einer jeweiligen Sprachprobe (u) eines Konferenzteilnehmers gebildet wird und diese Betragsdifferenz (!y!-!u!) mit einem Schwellwert verglichen wird.

3. Vermittlungssystem nach Anspruch 2,
dadurch gekennzeichnet,
daß die Konferenzeinrichtung so ausgestaltet ist, daß der Vergleich der Sprachintensitäten den zeitlich zurüchkiegenden Verlauf der Sprachintensitäten berücksichtigt.

4. Vermittlungssystem nach Anspruch 3,
dadurch gekennzeichnet,
daß zur Berücksichtigung des zeitlich zurückliegenden Verlaufs der Sprachintensitäten eine Tiefpaßfilterung der Betragsdifferenz vorgenommen wird.

5. Vermittlungssystem nach Anspruch 2, 3 oder 4,
dadurch gekennzeichnet,
daß für alle Teilnehmer nur eine einzige Anordnung zur Bildung der Betragsdifferenz und des Schwellwertvergleichs verwendet wird, die im Zeit-Multiplexbetrieb betrieben wird.

6. Vermittlungssystem nach Anspruch 5,
dadurch gekennzeichnet,
daß die Sprachproben der Konferezteilnehmer innerhalb eines PCM-Rahmens um jeweils eine bestimmte Anzahl von Zeitschlitzen getrennt aufeinanderfolgen und das Summersignal für einen Konferenzteilnehmer jeweils aus der zuletzt verangegangenen Sprachprobe jedes anderen Konferenzteilnehmers gewonnen wird.

## Claims

1. A switching system, more specifically, a PCM switching system comprising a conferencing arrangement, in which a sum signal is formed (5) for each participant in the conference from speech samples (A-D) of the relevant participant and a speech intensity is determined for each participant on the basis of which each share of the speech sample in the sum signal is determined, characterized in that the conferencing arrangement is arranged so that for the sum signal also a speech intensity is determined and for determining the share of the speech sample of a conference participant in the sum signal his speech intensity is compared (90) with the speech intensity determined for the sum signal.

2. The switching system as claimed in Claim 1, characterized in that the conferencing arrangement is arranged so that for comparing the speech intensities a differential value ( |y| - |u| ) of the sum signal (y) and a speech sample (u) of a participant is formed and in that this differential value ( |y|- |u|) is compared with a threshold value.

3. The switching system as claimed in Claim 2, characterized in that the conferencing arrangement is arranged so that for the comparison of the speech intensities the course of the speech intensities preceding in time is taken into account.

4. The switching system as claimed in Claim 3, characterized in that a lowpass filtering of the differential value is performed so that the course of the speech intensities preceding in time is taken into account.

5. A switching system as claimed in Claim 2, 3 or 4, characterized in that for all the subscribers only a single arrangement for forming the differential value and performing the comparison with the threshold value is used, which arrangement is operated in a time-division multiplex mode.

6. The switching system as claimed in Claim 5, characterized in that in a PCM frame the speech samples of the participants succeed one another with intervals lasting a specific number of time slots and in that the sum signal for a participant is recovered from the most recently preceding speech sample of any other participant.

## Revendications

1. Système de commutation, en particulier système de commutation PCM avec un dispositif de conférence dans lequel un signal de somme (5) est formé pour chaque participant à la conférence à partir d'échantillons vocaux (A-D) des participants à la conférence et, pour chaque participant à la conférence, une intensité vocale est déterminée à l'aide de laquelle la composante respective des échantillons vocaux dans le signal de somme est déterminée
caractérisé en ce
que le dispositif de conférence est conçu de telle sorte qu'une intensité vocale soit déterminée également pour le signal de somme et, pour la détermination de la part de l'échantillon vocal d'un participant à la conférence dans la signal de somme, son intensité vocale est comparée à l'intensité vocale (90) déterminée pour le signal de somme.

2. Système de commutation selon la revendication 1,
caractérisé en ce
que le dispositif de conférence est conçu de telle sorte que, pour la comparaison des intensités vocales, une différence de somme (!y! - !u!) soit formée par le signal de somme (y) et un échantillon vocal respectif (u) d'un participant à la conférence et cette différence de somme (!y! - !u!) soit comparée à une valeur-seuil.

3. Système de commutation selon la revendication 2,
caractérisé en ce
que le dispositif de conférence est conçu de telle sorte que la comparaison des intensités vocales prenne en considération le tracé antérieur des intensités vocales.

4. Système de commutation selon la revendication 3,
caractérisé en ce
qu'un filtrage passe-bas de la différence de somme est effectué pour la prise en considération du tracé antérieur des intensités vocales.

5. Système de commutation selon l'une des revendications 2, 3 ou 4,
caractérisé en ce
qu'un seul dispositif est utilisé pour tous les participants en vue de la formation de la différence de somme et de la comparaison des valeurs-seuils qui est effectuée dans le fonctionnement de multiplexage temporel.

6. Système de commutation selon la revendication 5,
caractérisé en ce
que les échantillons vocaux des participants à la conférence dans un cadre PCM se succèdent respectivement en étant séparés d'un nombre déterminé d'intervalles temporels et le signal de somme pour un participant à la conférence est respectivement obtenu à partir de l'échantillon vocal immédiatement précédent de chaque autre participant à la conférence.
